(19) Europäisches Patentamt
European Patent Office
Office européen des brevets

(11) **EP 3 503 538 A1**

(12) **EUROPEAN PATENT APPLICATION**

(43) Date of publication:
26.06.2019 Bulletin 2019/26

(51) Int Cl.:
*H04N 7/14* (2006.01)

(21) Application number: 17306830.5

(22) Date of filing: 19.12.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **THOMSON LICENSING**
**92130 Issy les Moulineaux (FR)**

(72) Inventors:
• **CHAMARET, Christel**
**35576 Cesson-Sévigné (FR)**
• **MARQUANT, Gwenaëlle**
**35576 Cesson-Sévigné (FR)**
• **DUONG, Quang Khanh Ngoc**
**35576 Cesson-Sévigné (FR)**

(74) Representative: **Vidon Brevets & Stratégie**
**16B, rue de Jouanet**
**BP 90333**
**35703 Rennes Cedex 7 (FR)**

(54) **METHOD FOR MANAGING A VIDEO CALL, CORRESPONDING COMPUTER PROGRAM COMPUTER, COMPUTER READABLE STORAGE MEDIUM, SERVER, SYSTEM AND DEVICE**

(57) The present disclosure relates to a method including:
- building a video composed stream as a function of a presence of at least one person in at least one first video frame acquired by a near end device during a video call between said near-end device and at least one far-end device, and/or of an acquired audio level associated to said first video frame;
- transmitting said video composed stream to said far-end device.

The content of the built video composed stream transmitted to the near-end device is thus depending on the presence of a person in the frame captured by the near-end device and on an associated audio level.

The present disclosure also relates to the corresponding computer program computer, computer readable storage medium, server, system and device.

Figure 2

**Description**

**1. Technical Field**

The present invention relates generally to video calling or video conferencing and more particularly to a method for managing a video call between a near-end device and a far-end device.

**2. Background Art**

Video call or video conference between two or more persons using smartphone or any connected devices becomes more and more popular as it brings convenience. Lots of video applications are crucial for our daily life, such as FaceTime™ or Skype™. This action of video conferencing is naturally performed and perceived as a usual face-to-face conversation. It is also popular that many people enjoy video conferencing in parallel with other activities when being at home. It implies that potentially people may move around the screen and camera to perform another action.

Typically, a video conference may occur at home: the main interlocutor talks with a friend, being in another place, while the main interlocutor is cooking or walking in another part of room to get an object to illustrate the conversation and so on. Consequently, these new habits lead people to move around the screen and camera of the conferencing apparatus, which usually remains static. Additional observation when performing video conference using smartphone is that user moves the phone quite often (e.g. during walking) and it is quite usual that the near-end camera captures unexpected scenes with lots of fluctuation that makes the third party (far-end) viewer really uncomfortable.

So, there is a need to propose solution making the conversation more comfortable than prior art solution for an end-user speaker and/or keeping the end-user speaker engaged in a video call despite variable conditions in the viewing experience.

**3. Summary**

The present disclosure relates a method performed during a video call between a near-end device and a far-end device that can adapt automatically (or at least partially automatically) a content transmitted to the far-end device (for being displayed for instance) as a function of a presence or an absence of a person in a field of view of a camera used by the near-end device for the video call. Such a camera is called hereinafter a "near-end camera".

Similarly, a microphone used by the near-end device for the video call is called hereinafter a "near-end microphone".

Notably, the content obtained by/from the near end device can be adapted (or modified) before being transmitted to the far-end device no one is present in the field of view of the near end camera. For instance, it can be adapted when the near-end person (that was present in the field of view of the near end camera) leaves the field of view of the near-end camera or when the near-end camera (e.g. phone camera) is moved unexpectedly (and thus may make the capturing images not comfortably seen).

The present disclosure proposes a method comprising

- building a video composed stream as a function of a presence of at least one person in at least one first video frame acquired by a near end device during a video call between said near-end device and at least one far-end device, and/or of an acquired audio level associated to said first video frame;
- transmitting said video composed stream to said far-end device.

The content of the built video composed stream transmitted to the near-end device is thus depending on the presence of a person in the frame captured by the near-end device and on an associated audio level. This person can be a speaker at the near-end side communicating with a speaker at the far-end side. He can also be a user of the near-end device (like a recognized or logged user), or a person other than the user of the near-end device.

The audio level can be a level of an audio stream acquired at the same time as the first video stream, by a near-end microphone of the near-end device.

According to an embodiment, the audio level is a speech level.

According to an embodiment, the building takes into account a ratio occupied by said at least one person in the first video frame.

According to an embodiment, the building comprises inserting at least a part of said first video frame in said composed video stream when a part occupied by said person in the first video frame is above a first value.

According to an embodiment, the building comprises inserting at least a part of said first video frame in said composed video stream when said person is present in said first video frame, said part occupied by said person in the first video frame being below said first value, and said audio level is above a second value.

According to an embodiment, the building comprises inserting a second video frame and/or a third video frame in said composed video stream. The second video frame may be a visual document like a work document, for example a slideshow, a table, a scientific publication, a graphical document, a still image, a video or a website. The third video frame may comprise a personal picture representing, or showing, at least one user of the near-end device.

According to an embodiment, an access to the second and/or third video frame is obtained from a user interface of said near end device.

According to an embodiment, the building comprises inserting said second and third video frame instead of at least a part of said first video frame in said composed video frame when said person is present in said first video frame and when said part occupied by said person in the first video frame is below said first value or a distance between said person and a camera of said near end device capturing said first video frame is below a third value, and said audio level is below said second value.

According to an embodiment, the third video frame include a representation of said person, a rendering of said representation of said person being representative of said distance and/or said ratio occupied by said at least one person in the first video frame.

According to an embodiment, the third video frame is a still image.

According to an embodiment, the building comprises inserting said second video frame instead of said at least a part of said first video frame in said composed video frame when said person is not present in said first video frame.

According to an embodiment, the inserting of said second and/or third video frame is performed after a delay.

According to an embodiment, the inserting of said second and/or third video frame is performed after a delay when said person is not present in said first video frame while said audio level stays above said second value.

The present disclosure also relates to a near-end device configured to:

- building a video composed stream as a function of a presence of at least one person in at least one first video frame obtained by said near end device during a video call with a least one far-end device and of an acquired audio level associated to said first video frame;
- transmitting said video composed stream to said far-end device.

While not explicitly described, the near-end device of the present disclosure can be adapted to perform the method of the present disclosure in any of its embodiments.

The present disclosure also relates to a video calling server configured to:

- build a video composed stream as a function of a presence of at least one person in at least one first video frame obtained from a first device during a video call with at least one second device and of an acquired audio level associated to said first video frame; and
- transmit said video composed stream to said second device.

While not explicitly described, the video calling server of the present disclosure can be adapted to perform the method of the present disclosure in any of its embodiments.

More generally, the method of the present disclosure may be implemented in at least one device (called here "near-end device") of a video calling system comprising two devices exchanging video call data and, if the system includes a video calling server by which the video call data run through, in the video calling server itself.

The present disclosure also relates to a video calling system comprising a first device connected to a second device, possibly through a video calling server, wherein said first device or, if appropriate, said video calling server is configured to:

- build a video composed stream as a function of a presence of at least one person in at least one first video frame obtained from a first device during a video call with at least one second device and of an acquired audio level associated to said first video frame; and
- transmit said video composed stream to said second device.

While not explicitly described, the video calling system of the present disclosure can be adapted to perform the method of the present disclosure in any of its embodiments.

While not explicitly described, the present embodiments related to a method or to the corresponding near-end device, Voice calling server or voice calling system can be employed in any combination or sub-combination.

The present disclosure also relates to a computer program product comprising program code instructions for implementing the above-disclosed method, in any of its embodiments, when said program is executed on a computer or a processor.

Notably, the present disclosure relates to a computer program product comprising program code instructions for implementing, when said program is executed on a computer or a processor, a method comprising:

- building a video composed stream as a function of a presence of at least one person in at least one first video frame acquired by a near end device during a video call between said near-end device and at least one far-end device, and/or of an acquired audio level associated to said first video frame;
- transmitting said video composed stream to said far-end device.

The present disclosure also relates to a non-transitory computer-readable storage medium storing a computer program product as defined hereinabove.

## 4. Brief description of the drawings

The invention can be better understood with reference to the following description and drawings, given by way of example and not limiting the scope of protection, and in which:

- Figure 1 is a flow chart of an exemplary embodiment of the method of the present disclosure;
- Figure 2 is a block diagram illustrating an exemplary embodiment of the method of the present disclosure;
- Figure 3 is a schematic view illustrating the results of the method of Figure1;
- Figures 4 and 5 are images wherein body parts are detected;
- Figures 6 and 7 are schematic views of the global architecture of a video calling system according to one embodiment of the present disclosure; and
- Figure 8 is a schematic view of an exemplary embodiment of a device of the present disclosure.

The components in the figures are not necessarily to scale, emphasis instead being placed upon illustrating the principles of the present disclosure.
It is to be noted that the drawings have only an illustration purpose and that the embodiments of the present disclosure are not limited to the illustrated embodiments.

## 5. Description of embodiments

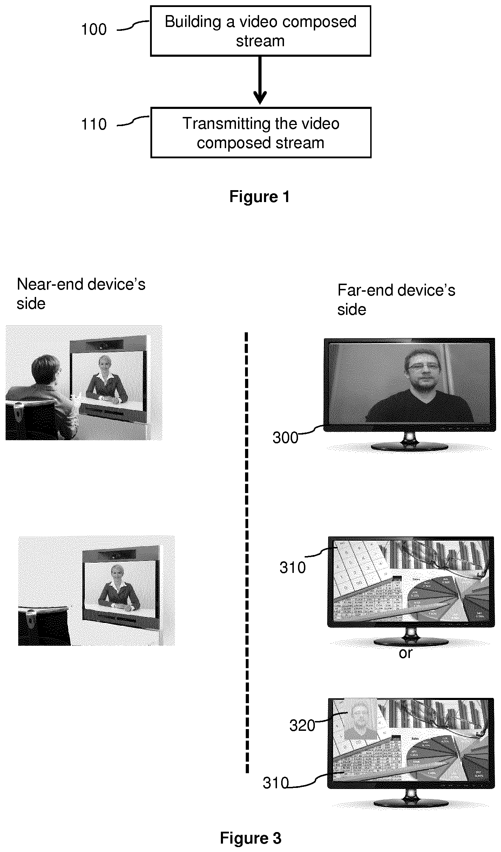

**Figure 1** is a flow chart showing an exemplary embodiment of the method of the present disclosure, performed during a video call between a near-end device and a far-end device. These steps may be implemented in the near-end device or in a video calling server involved in the video call between the near-end device and the far-end device. The near-end device is equipped with or connected to at least one camera and at least one microphone. Of course, the microphone may be integrated to the camera.
As shown in the exemplary embodiment of Figure 1, the method can comprise the followings steps:

- in step 100, a video composed stream is built as a function of a presence of at least one person in a first video frame acquired by the camera of the near end device during the video call and of an audio level associated to the first video frame acquired by the microphone of the near-end device, and
- in step 110, the video composed stream is transmitted to the far-end device.

The content transmitted to the far-end device is thus adapted as a function of a presence or absence of a person in the field of view of the near-end camera and to an audio level of an audio stream acquired at the near-end device's side. This person, also called near-end person, can be a speaker at the near-end side communicating with a speaker at the far-end side. He/she can also be a recognized user of the near-end device (like a user logged on the near end device). The person can also be a person different from a speaker and the user. The audio level can be notably a speech level of a speaker on the near-end device's side.
For example, when the speech level acquired by the near-end device is low (and thus when the corresponding speaker is assumed to be far from the device) and no one is present in the field of view of the near-end camera, an adapted video signal is transmitted to the far-end device. This adapted signal may comprise data shared by the near-end device, such as for example visual documents like a graphical presentation or schemes, and data relative to the user of the near-end device or to the near-end person who speaks, such as a personal picture. These data are displayed on the far-end device instead of the video frames acquired by the near-end camera.
At least some embodiments of the present disclosure can thus help keeping a user of the far-end device engaged in the conversation in situation where he/she cannot see a person in the field of view of the near-end device.
**Figure 3** schematically illustrates the present method. A man on the near-end device's side is speaking by video calling to a woman on the far-end device's side. In the upper part of the figure, the man is sitting on a chair in a field of view of a display device equipped with a camera. In that case, since the man is present in the video frames acquired by the near-end camera, these frames 300 are transmitted to the far-end device. So, the woman can see the man on the far-end display device. In the lower part of Figure 3, the man has left his chair. In that case, adapted data can be transmitted to the far-end device. For instance, a personal picture 320 of the man as well as visual graphs 310 can be transmitted to the far-end device and displayed on the far-end display device. In the images displayed on the far-end display device, the personal picture 320 can be for example superimposed on the visual graphs 310. In an exemplary embodiment, the personal picture can be superimposed in a transparency form on the visual graphs and the transparency factor is depending on the distance of the man to the near-end device. This distance may be estimated based on an audio level of a speech acquired by a microphone of the near-end device. The visual graphs 310 can be inserted with or without the personal picture 320.

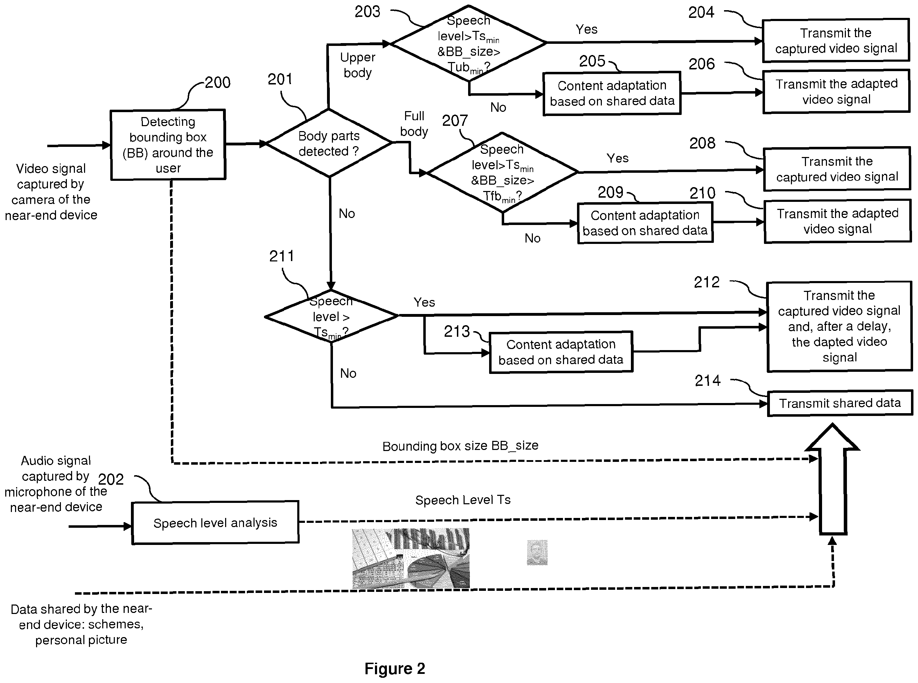

**Figure 2** is a block diagram describing the steps of building and transmitting the video composed signal in an exemplary embodiment. The video composed signal to be transmitted is built from the video signal captured by the near-end camera, the audio signal captured by the near-end microphone and data shared by the near-end device. These shared data can be initially stored in the storage medium of the near-end device, for instance, or stored in a storage medium accessible by the near-end device.

In a block 200, the video signal captured by the near-end camera is processed. This processing can comprise detecting, in at least one frame of the video signal, a bounding box BB around the near-end person. Such detecting can be performed, for instance, with classifiers method ("Fast and robust face finding via local context", Kruppa, H., Castrillon-Santana, M., & Schiele, B. (2003) or "Progressive Search Space Reduction for Human Pose Estimation", Ferrari, V., Marin-Jimenez, M. and Zisserman, A., Proceedings of the IEEE Conference on Computer Vision and Pattern Recognition (2008)) or deep learning methods ("You Only Look Once: Unified, Real-Time Object Detection", Joseph Redmon, Santosh Divvala, Ross Girshick, and Ali Farhadi, CVPR 2016). Such classifiers can be able to detect a full body or an upper body.

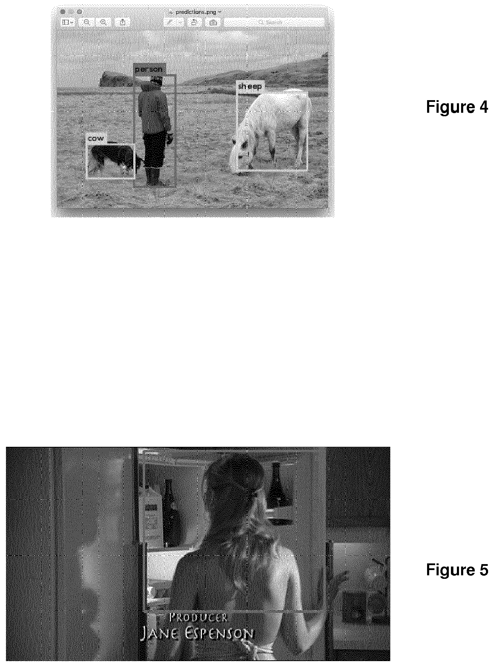

In the illustrated embodiment, the detection can be refined by determining that the body of the person detected in block 200 is a full body or an upper body. This refinement is implemented in box 201. The results of this detection are illustrated by **Figure 4 and Figure 5.** A full body of a person can be detected in the image of Figure 4 and an upper body part can be detected in the image of Figure 5.

In the exemplary embodiment illustrated, the block 201 can deliver three possibilities of the body detection: no body detected, full body detected, upper body detected.

The size of the bounding box of the detected body, called BB_size, can be computed in block 200 or 201. This size can be representative of the ratio occupied by the person in the video frames.

In block 202, the audio signal captured by the near-end microphone can be analyzed and a speech level can be determined. A voice activity detector (VAD) can be used for instance to detect if the near-end person or another person at the near-end side speaks or not. Examples of VAD block include VAD Block employed in some prior art audio conferencing systems as disclosed in "*Approach for Energy-Based Voice Detector with Adaptive Scaling Factor*", Kirill Sakhnov, (IAENG International Journal of Computer Science, 36:4, IJCS_36_4_16) and in "*Voice Activity Detection for Speech Enhancement Applications*", E. Verteletskaya and K. Sakhnov. When the near-end speech (speech of the near-end speaker) is active, the smooth speech energy level can be tracked. The near-end speaker's speech level over time can then be outputted. This energy level can be used also to infer the distance between the speaker and the near-end device. When the near-end speech is active and its energy level is certainly reducing, it can be an indicator that the near-end speaker moves further from the near-end device.

The speech level Ts can be used in other blocks 203, 207 and 211 as well as the bounding box size BB_size. In these blocks, the speech level Ts can be compared to a value (like an audio threshold $Ts_{min}$) and/or the bounding box size BB size can be compared to a value (like a threshold $Tub_{min}$ (threshold for the upper body) or $Tfb_{min}$ (threshold for the full body)).

When an upper body is detected in block 201, Ts can be compared to $Ts_{min}$ and/or BB_size can be compared to $Tub_{min}$ in block 203. If $Ts > Ts_{min}$ and $BB\_size > Tub_{min}$, the near-end person is assumed to be close to the near-device. The video signal captured by the near-end camera can thus be transmitted as such (block 204).

If $Ts <= Ts_{min}$ or $BB\_size <= Tub_{min}$ (the audio level is too low or the upper part of the near-end person is too small), the near-end person is assumed to be too far from the near-device for being interesting for a user of the far-end device. The video signal captured by the near-end camera can be omitted in the transmitted signal. So, the content of the video signal to be transmitted to the far-end device can be built based on the shared data (block 205) instead of the captured signal and the resulting built signal is transmitted to the far-end device (block 206).

When a full body is detected in block 201, Ts can be compared to a value, like the value $Ts_{min}$ and/or BB_size can be compared to a value, like the value $Tfb_{min}$ in block 207. If $Ts > Ts_{min}$ and $BB\_size > Tfb_{min}$, the near-end person is assumed to be sufficiently close to the near-device for being interesting for the user of the far end device. The video signal captured by the near-end camera can thus be transmitted as such (block 208).

If $Ts < Ts_{min}$ or $BB\_size < Tfb_{min}$ (the audio level is too low or the full body of the near-end person is too small), the near-end person is assumed to be too far from the near-device for being interesting for the user of the far end device.

The video signal captured by the near-end camera can be omitted. So, the content of the video signal to be transmitted to the far-end device is built based on the shared data (block 209), instead of the captured data, and the resulting signal is transmitted to the far-end device (block 210).

When nobody is detected in block 201, Ts is compared to a value (like $Ts_{min}$) in block 211. If $Ts>Ts_{min}$, the near-end person is assumed to be close to the near-device even if not visible (for instance, the near-end person can move around the near-end device). In this case, the video signal captured by the near-end camera can first be transmitted (block 212) to the far-end device, and after a predetermined delay, if the near-end person is still not in the field of view of the near-end camera, the content of the video signal to be transmitted to the far-end device can be built based on the shared data (block 213) and the resulting signal is transmitted to the far-end device (block 212).

If $Ts<Ts_{min}$, a video signal based on shared data can be transmitted to the far-end device (block 214).

In blocks 205, 209 and 213, the shared data used for building the video signal may be a visual document (like a graph), a still image, like a landscape or a favorite picture of a user of near end device, a personal picture, representing a user of the near-end. At least one of the document can be represented with a transparency factor. In some embodiments, the personal picture of small size can be rendered together with the visual document (for instance it can be superimposed on the visual document), like in a corner or at the middle of the visual document, and the transparency factor can set the transparency level of the personal picture on the visual document. The transparency factor can be varying and can depend on the distance of a person in the field of view of the near-end camera to the near-end device. This distance may be determined based on the speech level Ts and/or the size of the bounding box.

Of course, a higher number of values, used as thresholds, can be used to build more finely the content of the video signal transmitted to the far-end device. For example, the method may comprise an additional threshold $Tup_{confort}$ at which a picture of the near-end speaker or a picture of the near-end user is superimposed on the visual document. The processing may be summarized in the following table:

| | Speech level Ts < $Ts_{min}$ | Speech level Ts > $Ts_{min}$ |
|---|---|---|
| BB_size<$Tup_{min}$ | Visual document | Visual document |
| $Tup_{min}$< BB_size < $Tup_{confort}$ | Personal picture superimposed on the visual document with the transparency factor F | Personal picture superimposed on the visual document with the transparency factor F |
| $Tup_{confort}$ < BB_size | Personal picture superimposed on the visual document with the transparency factor F=1 | Video signal captured by the near-end camera |

The transparency factor F is a value comprised between 0 and 1. When the transparency factor F is equal to 0, the personal picture is not visible (this is the case when BB_size<$Tup_{min}$). When the transparency factor F is equal to 1, the personal picture is clearly visible (this is the case when $Tup_{confort}$ < BB_size).

The transparency factor F is for example defined as follows:

$$F = \frac{(1 - \gamma * BB_{size}) + (1 - \gamma) * Ts}{1 - \gamma * Tup_{confort} + (1 - \gamma) * Ts_{min}}$$

wherein $\gamma$ is a value comprised between 0 and 1 and defines the weight of the speech level versus the weight of the bounding box size in the computation of the transparency factor. When $\gamma$=0.5, the speech level and the bounding box size have the same weight in the computation of the transparency factor.

By this method, the content transmitted to the far-end device can change when the near-end person moves. When the near-end person is too far from the near-end device (bounding box too small and/or speech level too low), the far-end device receives relevant content (visual document) as well as a personal picture of the near-end person which is superimposed to the visual document and with a transparency based on the near-end person distance to the near-end device. This distance can be estimated based on the size of the bounding box and/or on the speech level. Thus, the far-end speaker remains engaged in the conversation and is implicitly informed of the position of the near-end person versus the near-end device.

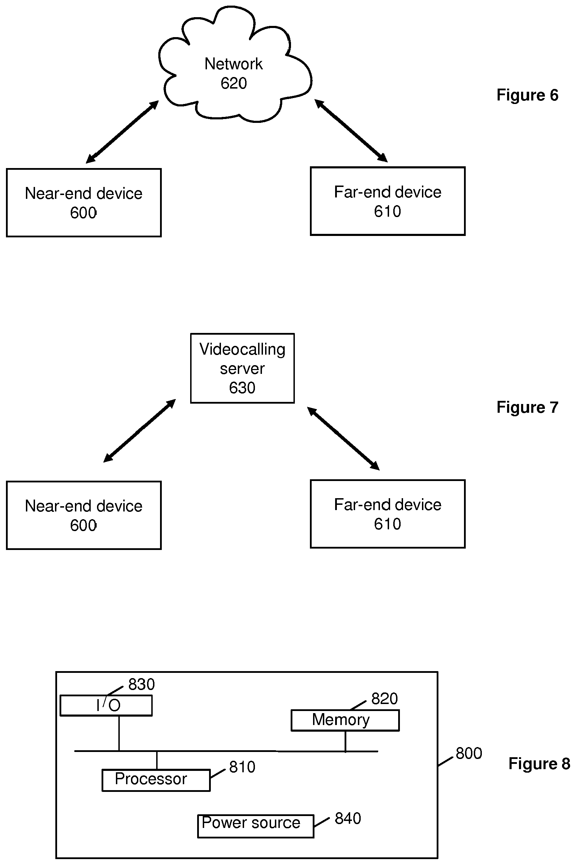

**Figures 6 and 7** represent global architecture of a video calling system implementing at least one embodiment of the method of the present disclosure, like the above-described method.

In Figure 6, a near-device 600 can transmit video signals to at least one far-end device 610 via a network 620. The above-described method is implemented in the near-end device.

In Figure 7, the near-device 600 can transmit video signal to the far-end device 610 via a video calling server 630. The above-described method is implemented either in the near-end device 620 or the video calling server 630.

Of course, in either of those embodiments, the video calling server and/or the at least one far end device can also implement at least one embodiment of the method of the present disclosure, for building and transmitting a composed video stream to the near end device. In such embodiments, the implementation of the method by the near-end device, video calling server and/or the at least one far-end device do not need to be performed symmetrically. For instance, the method can be implemented as illustrated by figure 6 for building and transmitting video signals to the far-end device, while been implemented in the video calling server as illustrated by figure 7 for building and transmitting video signals to the near-end device.

**Figure 8** represents an exemplary architecture of a device 800 configured to participate to a video calling according to any exemplary embodiment of the present disclosure. As mentioned hereinabove, this device can be the near-end device or any other device positioned between the near-end device and the far-end device, e.g. a video calling server (or the far-end device if it itself implements the method of the present disclosure for building and transmitting video signals to the near-end device).

The device 800 comprises one or more processor(s) 810, which is(are), for example, a CPU, a GPU and/or a DSP (English acronym of Digital Signal Processor), along with internal memory 820 (e.g. RAM, ROM, EPROM). The device 800 comprises one or several Input/ Output interface(s) 830 adapted to display output information and/or allow a user to enter commands and/or data (e.g. a keyboard, a mouse, a touchpad, a webcam); and a power source 840 which may be external to the device 800. The device 800 may also comprise network interface(s) (not shown). The video signal and the audio signal can be obtained from a camera integrated into or connected to the near end-device. The output video signal can be sent directly or indirectly to the far-end device.

According to an exemplary and non-limitative embodiment of the invention, the device 800 further comprises a computer program stored in the memory 820. The computer program comprises instructions which, when executed by the device 800, in particular by the processor 810, make the device 800 carry out the method described with reference to figures 1 to 3. According to a variant, the computer program is stored externally to the device 800 on a non-transitory digital data support, e.g. on an external storage medium such as a HDD, CD-ROM, DVD, a read-only and/or DVD drive and/or a DVD Read/Write drive, all known in the art. The device 800 thus comprises an interface to read the computer program. Further, the device 800 could access one or more Universal Serial Bus (USB)-type storage devices (e.g., "memory sticks.") through corresponding USB ports (not shown).

According to exemplary and non-limitative embodiments, the device 800 is a device, which belongs to a set comprising:

- a mobile device;
- a communication device;
- a game device;
- a tablet (or tablet computer);
- a laptop;
- a still image camera;
- a video camera;
- an encoding chip;
- a still image server;
- a video server (e.g. a broadcast server, a video-on-demand server or a web server);
- a video uploading platform; and
- a display or a decoding chip.

The implementations described herein may be implemented in, for example, a method or a process, a device, a software program, a data stream, or a signal. Even if only discussed in the context of a single form of implementation (for example, discussed only as a method or a device), the implementation of features discussed may also be implemented in other forms (for example a program). A device may be implemented in, for example, appropriate hardware, software, and firmware. The methods may be implemented in, for example, a device such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a camera, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method comprising

   - building (100) a video composed stream as a function of a presence of at least one person in at least one first video frame acquired by a near end device during a video call between said near-end device and at least one far-end device, and/or of an acquired audio level associated to said first video frame;
   - transmitting (110) said video composed stream to said far-end device.

2. The method according to claim 1, wherein the audio level is a speech level.

3. The method according to claim 1 or 2, wherein said building takes into account a ratio occupied by said at least one person in the first video frame.

4. The method according to any one of claims 1 to 3, wherein said building comprises inserting at least a part of said first video frame in said composed video stream when a part occupied by said person in the first video frame is above a first value.

5. The method according to claim 4, wherein said building comprises inserting at least a part of said first video frame in said composed video stream when said person is present in said first video frame, said part occupied by said person in the first video frame being below said first value, and said audio level is above a second value.

6. The method according to claim 1, wherein said building comprises inserting a second video frame and/or a third video frame in said composed video stream.

7. The method according to claim 6 wherein said building comprises inserting said second and third video frame instead of at least a part of said first video frame in said composed video frame when said person is present in said first video frame and when said part occupied by said person in the first video frame is below said first value or a distance between said person and a camera of said near end device capturing said first video frame is below a third value, and said audio level is below a second value.

8. The method according of claim 6 or 7, wherein said third video frame include a representation of said person, a rendering of said representation of said person being representative of said distance, said audio level, and/or said ratio.

9. The method according to claim 6, wherein said building comprises inserting said second video frame instead of said at least a part of said first video frame in said composed video frame when said person is not present in said first video frame.

10. The method according to any one of claims 6 to 9, wherein said inserting of said second and/or third video frame is performed after a delay.

11. Near-end device (600) for establishing a video call with a far-end device, said near-end device being configured to:

   - building a video composed stream as a function of a presence of at least one person in at least one first video frame acquired by said near end device during said video call and of an acquired audio level associated to said video frame;
   - transmitting said video composed stream to said far-end device.

12. Video calling server (630) for establishing a video call between a near-end device and a far-end device, said system being configured to:

   - build a video composed stream as a function of a presence of at least one person in at least one first video frame acquired by said near end device during said video call and of an acquired audio level associated to said video frame; and
   - transmit said video composed stream to said far-end device.

13. Video calling system comprising a first device connected to a second device, possibly through a video calling server, wherein said first device or, if appropriate, said video calling server is configured to:

   - build a video composed stream as a function of a presence of at least one person in at least one first video frame obtained from a first device during a video call with at least one second device and of an acquired audio level associated to said first video frame; and
   - transmit said video composed stream to said second device.

14. Computer program product comprising program code instructions for implementing, when said program is executed on a computer or a processor, a method comprising:

   - building (100) a video composed stream as a function of a presence of at least one person in at least one first video frame acquired by a near end device during a video call between said near-end device and at least one far-end device, and/or of an acquired audio level associated to said first video frame;
   - transmitting (110) said video composed stream to said far-end device.

15. Non-transitory computer-readable storage medium storing a computer program product comprising program code instructions for executing, when said program is executed by a computer, a method comprising

   - building (100) a video composed stream as a function of a presence of at least one person in at least one first video frame acquired by a near end device during a video call between said near-end device and at least one far-end device, and/or of an acquired audio level associated to said first video frame;
   - transmitting (110) said video composed stream to said far-end device.

100 — Building a video composed stream

110 — Transmitting the video composed stream

**Figure 1**

Near-end device's side

Far-end device's side

300

310

or

320

310

**Figure 3**

EP 3 503 538 A1

Figure 2

Figure 4

Figure 5

Network
620

Near-end device
600

Far-end device
610

**Figure 6**

Videocalling
server
630

Near-end device
600

Far-end device
610

**Figure 7**

830
I/O

820
Memory

810
Processor

800

Power source 840

**Figure 8**

Europäisches
Patentamt

European
Patent Office

Office européen
des brevets

# EUROPEAN SEARCH REPORT

**Application Number**

EP 17 30 6830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2014/003450 A1 (BENTLEY JON L [US] ET AL) 2 January 2014 (2014-01-02)<br>* abstract *<br>* paragraphs [0004] - [0006], [0021], [0027], [0035], [0036], [0042], [0043], [0046] - [0049], [0051], [0053], [0054], [0056], [0068], [0069] *<br>* paragraphs [0072], [0073] * | 1,2,6-15<br><br>3-5 | INV.<br>H04N7/14 |
| Y | US 2003/052911 A1 (COHEN-SOLAL ERIC [US]) 20 March 2003 (2003-03-20)<br>* abstract *<br>* paragraphs [0025], [0027] * | 3-5 | |
| X | US 6 570 606 B1 (SIDHU IKHLAQ [US] ET AL) 27 May 2003 (2003-05-27)<br>* abstract *<br>* column 5, lines 11-32 *<br>* column 7, lines 16-27 *<br>* column 9, lines 56-59 *<br>* column 10, lines 39-53 * | 1,2,6,<br>8-15 | |
| X | US 2007/211141 A1 (CHRISTIANSEN BERND [US]) 13 September 2007 (2007-09-13)<br>* abstract *<br>* paragraphs [0027], [0029] - [0031], [0037] - [0041], [0043] - [0046], [0065], [0066] * | 1,2,6,8,<br>10-15 | TECHNICAL FIELDS SEARCHED (IPC)<br><br>H04N |
| X | US 2010/103245 A1 (DECKER ERAN [IL] ET AL) 29 April 2010 (2010-04-29)<br>* abstract * | 1-4,<br>11-15 | |
| A | US 2009/259460 A1 (JIA WEIJIA [HK] ET AL) 15 October 2009 (2009-10-15)<br>* abstract * | 1,11-15 | |

-/--

The present search report has been drawn up for all claims

| Place of search | Date of completion of the search | Examiner |
|---|---|---|
| Berlin | 17 May 2018 | Roche, Nicolas |

EPO FORM 1503 03.82 (P04C01)

page 1 of 2

Europäisches
Patentamt

European
Patent Office

Office européen
des brevets

**EUROPEAN SEARCH REPORT**

Application Number

EP 17 30 6830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/157366 A1 (PADMANABH KUMAR [IN] ET AL) 30 June 2011 (2011-06-30) * abstract * ----- | 1,11-15 | |
| A | US 2016/359941 A1 (KVAAL INGRID [NO] ET AL) 8 December 2016 (2016-12-08) * abstract * ----- | 1,11-15 | |

TECHNICAL FIELDS
SEARCHED        (IPC)

The present search report has been drawn up for all claims

| Place of search | Date of completion of the search | Examiner |
|---|---|---|
| Berlin | 17 May 2018 | Roche, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 17 30 6830

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2018

| Patent document cited in search report | | Publication date | Patent family member(s) | | Publication date |
|---|---|---|---|---|---|
| US 2014003450 | A1 | 02-01-2014 | NONE | | |
| US 2003052911 | A1 | 20-03-2003 | CN | 1557083 A | 22-12-2004 |
| | | | EP | 1430692 A1 | 23-06-2004 |
| | | | JP | 4768888 B2 | 07-09-2011 |
| | | | JP | 2005503726 A | 03-02-2005 |
| | | | JP | 2011172250 A | 01-09-2011 |
| | | | KR | 20040041168 A | 14-05-2004 |
| | | | US | 2003052911 A1 | 20-03-2003 |
| | | | WO | 03026250 A1 | 27-03-2003 |
| US 6570606 | B1 | 27-05-2003 | NONE | | |
| US 2007211141 | A1 | 13-09-2007 | AU | 2007223936 A1 | 13-09-2007 |
| | | | CA | 2644147 A1 | 13-09-2007 |
| | | | EP | 1997313 A2 | 03-12-2008 |
| | | | EP | 2357818 A2 | 17-08-2011 |
| | | | US | 2007211141 A1 | 13-09-2007 |
| | | | WO | 2007103412 A2 | 13-09-2007 |
| US 2010103245 | A1 | 29-04-2010 | US | 2010103245 A1 | 29-04-2010 |
| | | | US | 2013222529 A1 | 29-08-2013 |
| | | | US | 2016173824 A1 | 16-06-2016 |
| US 2009259460 | A1 | 15-10-2009 | NONE | | |
| US 2011157366 | A1 | 30-06-2011 | NONE | | |
| US 2016359941 | A1 | 08-12-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KRUPPA, H. ; CASTRILLON-SANTANA, M. ; SCHIELE, B.** *Fast and robust face finding via local context,* 2003
- **FERRARI, V. ; MARIN-JIMENEZ, M. ; ZISSERMAN, A.** Progressive Search Space Reduction for Human Pose Estimation. *Proceedings of the IEEE Conference on Computer Vision and Pattern Recognition,* 2008

- **JOSEPH REDMON ; SANTOSH DIVVALA ; ROSS GIRSHICK ; ALI FARHADI.** You Only Look Once: Unified, Real-Time Object Detection. *CVPR,* 2016